# EUROPÄISCHE PATENTSCHRIFT

(11) **EP 1 902 591 B1**
(45) Veröffentlichungstag und Bekanntmachung des Hinweises auf die Patenterteilung: **01.04.2009**
(21) Anmeldenummer: 06775699.9
(22) Anmeldetag: 11.07.2006
(51) Int. Cl.: H04W 4/00, H04M 3/42, H04M 1/57

(54) **VERFAHREN ZUR BENACHRICHTIGUNG EINES TEILNEHMERS EINES MOBILFUNKNETZES ÜBER VERPASSTE ANRUFE**
METHOD FOR INFORMING A SUBSCRIBER OF A MOBILE TELEPHONY NETWORK ABOUT MISSED CALLS
PROCEDE DESTINE A NOTIFIER DES APPELS RATES A UN ABONNE D'UN RESEAU DE TELEPHONIE MOBILE

(30) Priorität: 12.07.2005 DE 102005032811; 15.02.2006 DE 102006006874
(43) Veröffentlichungstag der Anmeldung: 26.03.2008
(73) Patentinhaber: T-Mobile International AG, 53227 Bonn (DE)
(72) Erfinder: JESSEN, Peter, 53225 Bonn (DE); WEIGANG, Holger, 53229 Bonn (DE)
(74) Vertreter: Riebling, Peter
(86) Internationale Anmeldenummer: PCT/DE2006/001199
(87) Internationale Veröffentlichungsnummer: WO 2007/006288

(56) Entgegenhaltungen:
- WO-A-00/05860
- WO-A-03/077570
- US-A- 5 412 711
- US-B1- 6 748 058

## Beschreibung

Die Erfindung betrifft ein Verfahren zur Benachrichtigung eines Teilnehmers eines Mobilfunknetzes über verpassten Anrufe.

Ein SMS-tnformationsdienst für verpasste Anrufe ist bekannt und wird beispielsweise wird im D1-Mobilfunknetz der T-Mobile Deutschland GmbH unter der Bezeichnung "SMS Lost Calls" angeboten. Dieser Informationsdienst funktioniert immer dann, wenn das Mobiltelefon eines Teilnehmers ausgeschaltet ist oder sich in einem Funkloch befindet und keine Rufumleitungen, z. B. zur Mobilbox, aktiviert wurden. Erhält der Teilnehmer unter diesen Umständen einen Anruf, so wird der Anruf im Mobilfunknetz registriert. Sobald der angerufene Teilnehmer sein Mobiltelefon wieder einschaltet, wird er über SMS über die zwischenzeitlich verpassten Anrufe informiert. Jede Anrufemummer wird vorzugsweise nur einmal in der SMS angezeigt. Informiert wird beispielsweise jeweils über die letzten fünf Anrufer, wobei jede Anrufemummer nur für eine begrenzte Zeitdauer gespeichert wird. Naturgemäß funktioniert das Verfahren nur dann, wenn der Anrufer seine Telefonnummer übermittelt, d.h. seine Rufnummemübermittlung (CLI: Calling Line Identification) aktiviert hat. Hat der Anrufer seine Rufnummerübermitflung ausgeschaltet, dann kann der Angerufene nicht über die Identität des Anrufers informiert werden.

Die WO 03/077570 A1 offenbart ein Verfahren zur Benachrichtigung eines Teilnehmers eines Mobilfunknetzes über einen eingegangenen Anruf eines Anrufers während das Mobiltelefon des Teilnehmers ausgeschaltet war oder keine Verbindung mit dem Mobilfunknetz bestand. Die Benachrichtigung erfolgt über das Mobiltelefon des Teilnehmers, sobald das Mobiltelefon sich wieder im Mobilfunknetz registriert hat, wobei die Nachricht zumindest die Rufnummer des verpassten Anrufers umfasst. Der Fall einer abgeschalteten Rufnummemanzeige (CLI: Calling Line Identification) des anrufenden Teilnehmers wird nicht behandelt.

US 6 748 058 B1 betrifft ein Anruferidentifikationssystem, bei dem im Falle einer unterdrückten Rufnummemanzeige (CLIR: Calling Line Identification Restriction) seitens des Anrufers vom Mobilfunknetz automatisch eine Nachricht an den Anrufer übermittelt wird, anhand welcher der Anrufer aufgefordert wird, seine Rufnummernübermittlung temporär für diesen Anruf freizuschalten, so dass die Rufnummer des Anrufers dem Teilnehmer mitgeteilt werden kann.

Die Aufgabe der Erfindung besteht darin, ein Verfahren zur Benachrichtigung von Mobilfunkteilnehmern über verpasste Anrufe anzugeben, das die Möglichkeit bietet, den Teilnehmer auch Ober Anrufe von Anrufern mit unterdrückter Rufnummernübermittlung zu benachrichtigen.

Diese Aufgabe wird erfindungsgemäß durch ein Verfahren mit den Merkmalen des Patentanspruchs 1 gelöst.

Vorteilhafte Ausgestaltungen und Weiterbildungen des erfindungsgemäßen Verfahrens sind in den Unteransprüchen angegeben.

Die Erfindung basiert auf einer Dialogsteuerung für eine Kommunikation zwischen einem Mobilfunkteilnehmer und dessen Mobilbox. Die Dialogsteuerung beruht vorzugsweise auf einer Sprachinformation von der Mobilbox zum Mobiltelefon des Teilnehmers und einer DTMF-Kommunikation vom Mobiltelefon des Teilnehmers zur Mobilbox. Diese Dialogsteuerung erfolgt vorzugsweise vor der Durchschaltung der Verbindung und der Erzeugung von Gebührendatensätzen (Charging Records) in der Mobilvermittlungsstelle (MSC). Dieser Dialog kann insbesondere genutzt werden, um bei unterdrückter Rufnummeranzeige des rufenden Teilnehmers diese anzufordern und erst danach eine Verbindung mit Charging Records herzustellen.

Bisher konnte vor der Durchschaltung einer Verbindung zwischen einer Mobilvermittlungsstelle und der Mobilbox kein Dialog durchgeführt werden, und damit kein Informationsaustausch stattfinden. Ein solcher Dialog zwischen Teilnehmer und Mobilbox ist jedoch erforderlich, wenn eine Zustimmung vom Teilnehmer eingeholt werden muss, z. B. Übertragung der Rufnummer, oder Herstellen der Verbindung mit Gebühren Records.

Erfindungsgemäß wird der Ablauf der ISUP Signalisierung zwischen der Mobilvermittlungsstelle (MSC: Mobile Switching Centre) und der Mobilbox verändert. Der ISDN User Part (ISUP) ist der ISDN-spezifische Anteil an der Übertragung von Zusatzinformationen über den Signalisierungskanal zwischen Vermittlungsstellen. Erfindungsgemäß ist es erforderlich, dass die Standard ISUP Nachrichten in der Reihenfolge vom Teilnehmer bzw. von der Mobilbox verändert werden. Des Weiteren ist es erforderlich, dass Parameter in den einzelnen ISUP Nachrichten entsprechend dem Dialog zwischen dem Teilnehmer und der Mobilbox gesetzt werden.

Das erfindungsgemäße Verfahren ist nicht nur unter der Bedingung CFNREACH (call forwarding not reachable) durchführbar, sondern auch bei allen anderen unbedingten Rufweiterleitungen (unconditional call forwardings), wie beispielsweise CFBUSY (call forwarding busy) und CFNREPLY (call forwarding no reply.

Das erfindungsgemäße Verfahren kann vorzugsweise als Computerprogramm realisiert werden, dessen Programmcode auf einem Computer eines Netzelementes des Mobilfunknetzes ausgeführt wird.

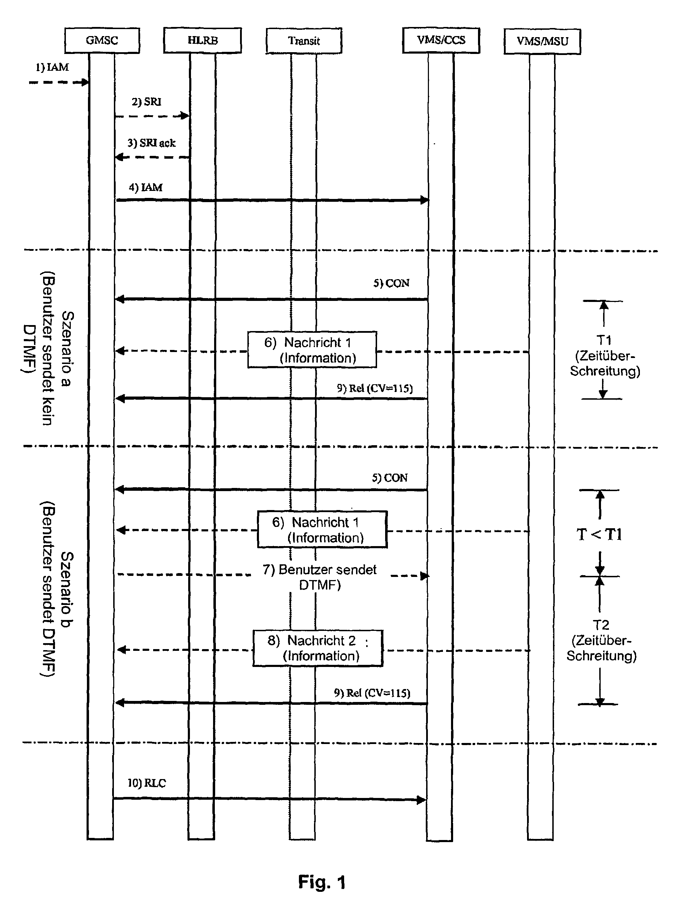

Anhand von Figur 1 wird der Anruf- und Signalisierungsablauf eines bevorzugten Ausführungsbeispiels der Erfindung näher erläutert.

Als Ausgangssituation wird angenommen, dass ein Anrufer, beispielsweise ein Teilnehmer eines öffentlichen Kommunikationsnetzes, einen anderen Teilnehmer, beispielsweise einen Teilnehmer eines Mobilfunknetzes, nachfolgend auch Angerufener genannt, erreichen möchte. Hierzu wählt der Anrufer die Rufnummer des Angerufenen.

Entsprechend Figur 1 trifft nun in einem ersten Schritt 1) der Anrufwunsch in Form - einer IAM-Nachricht (Initial Address Message) bei der zuständigen (Übergangs-)Vermittlungsstelle (GMSC: Gateway Mobile Switching Center) ein. Die IAM-Nachricht sorgt unter anderem dafür, dass ein für den gewünschten Anrufdienst geeigneter Nutzkanal geschaltet wird und enthält Angaben über den Dienst, die Eigenschaften des Nutzkanals und über Dienstmerkmale. Die IAM-Nachricht enthält unter anderem die Mobilfunkrufnummer MSISDN des Angerufenen, die sich aus einem Ländercode (CC) einer nationalen Vorwahl (NDC) und einer Teilnehmernummer (SN) zusammensetzt. Die MSISDN wird von der Vermittlungsstelle ausgewertet. Der Anrufer kann sowohl Teilnehmer eines Festnetzes (PSTN/ISDN) oder aber eines Mobilfunknetzes (PLMN) sein.

Gemäß den Schritten 2) und 3) wird nun in der Regel die folgende Routingprozedur für den Anruf durchgeführt: Die Vermittlungsstelle GMSC sendet eine sogenannte SRI-Nachricht zum Heimatregister HLRB des angerufenen Teilnehmers. Die SRI-Nachricht (Send Routing Information) ist eine MAP Nachricht, welche die Vermittlungsstelle an das Heimatregister HLRB des Angerufenen sendet, um von diesem entsprechende Routinginformationen, z.B. Aufenthaltsort des Angerufenen, zu erhalten, um einen Anrufwunsch zu dem gewünschten angerufenen Teilnehmer weiterleiten zu können. Im angenommenen Fall hat der angerufene Teilnehmer sein Mobiltelefon ausgeschaltet oder hat keine Verbindung zu seinem Mobilfunknetz. Dieser Umstand ist dem Heimatregister HLRB bekannt. Beispielsweise hat der angerufene Teilnehmer in diesem Falle sein Mobiltelefon ausgeschaltet. Ferner ist bekannt (detach/attach status), dass der angerufene Teilnehmer im Falle der "Nicht-Erreichbarkeit" seine Mobilbox (Anrufbeantworterfunktion) nicht aktiviert hat, so dass der Anrufer auch keine Nachricht auf der Mobilbox hinterlassen kann. Da der angerufene Teilnehmer nicht antwortet und auch keine Rufumleitung auf die Mobilbox geschaltet hat, erkennt das HLRB die Bedingung: Call Forwarding Not Reachablb (CFNREACH), Rufweiterleitung, wenn nicht erreichbar.

Bei CFNR wird der Anruf weitergeschaltet, wenn sich der Angerufene nicht meldet. Dieses Dienstmerkmal erlaubt es dem Operator, den Ruf dann umzuleiten, wenn der Teilnehmer nicht eingebucht (detached) ist. Das HLRB gibt in diesem Falle eine SRI-Acknowledge-Nachricht an die Vermittlungsstelle GMSC zurück, in welcher eine allgemeine Rufnummer für die Rufumleitung (CFD FTNO: Call Forwarding Forwarded to No.) enthalten ist, an die der Anruf weitergeleitet werden soll (beispielsweise "0" NDC "CC" 12345678), mit NDC=National Destination Code, CC=nicht wählbares Zeichen "C" zwei mal, damit ein Kunde den Dienst nicht selber anwählen kann und zur Erkennung des Dienstes am Voice-Mail-System VMS/CCS. Die Vermittlungsstelle GMSC führt nun eine Rufweiterleitung für diese FTNO Rufnummer durch. Die entsprechende Rufnummer für die Rufweiterleitung muss zuvor in einer entsprechenden Routingdatenbank festgelegt werden. Die empfangene Nummer "0" NDC "CC" 12345678 wird nun in der SRI-Nachricht an das HLRB übermittelt. Diese Nummer gehört zu einem Voice-Mail-System VMS/CCS. Nachdem das HLRB die SRI-Nachricht mit der speziellen MSISDN, d.h. der oben genannten Mobilboxnummer empfangen hat, berechnet es die Routingadresse des teilnehmereigenen Voice-Mail-Systems in Abhängigkeit des Nationalcodes NDC und gemäß dem MNP Konzept (Mobile Number Portability). Das HLRB findet eine Adresse des Voice-Mail-Systems VMS/CCS.

In Schritt 4) sendet die Mobilvermittlungsstelle GMSC nun eine IAM-Nachricht an das Voice-Mail-System des Teilnehmers: Die IAM-Nachricht enthält die Adresse (Rufnummer) des anrufenden Teilnehmers (A), die Adresse des angerufenen Teilnehmers (MS B) und die umadressierte Adresse des Voice-Mail-Systems des Angerufenen CVMS/CCS. Das Voice-Mail-System VMS/CCS extrahiert die A- und MS B- Nummern und speichert die A-Nummer des Anrufenden in einem Datenbankeintrag der MS B-Nummer. Das Voice-Mail-System VMS/CCS identifiziert den Umstand, dass der anrufende Teilnehmer A seine Rufnummernübermittlung (CLI) unterdrückt hat (CLIR). Falls die CLI des Anrufers nicht verfügbar ist, löscht das Voice-Mail-System den Anruf und baut die Verbindung zum Anrufer ab mit einem speziellen Release Cause.

Erfindungsgemäß wird nun gemäß Schritt 5) im Falle einer unterdrückten Anruferkennung CLI durch das Voice-Mail-System VMS/CCS eine Bestätigungsnachricht (Connect Message oder CON Message) zum GMSC gesendet und die Abrechnung des Anrufs wird im MSC gestartet.

Nun wird ein speziell für den erfindungsgemäßen Dienst eingerichtetes Voice-Mail-System VMS/MSU aktiviert, und mittels einer speziellen Sprachansage gemäß Schritt 6) wird nun der anrufende Teilnehmer A benachrichtigt und aufgefordert, die Übermittlung seiner Rufnummernkennung CLI temporär für diesen Anruf freizugeben. Hierbei wird er vom VMS/MSU aufgefordert, diese Freigabe durch Betätigen einer entsprechenden Tastenfolge auf dem Mobiltelefon durchzuführen. Die vom Teilnehmer eingegebene Tastenfolge wird mittels Zweitonverfahren DTMF an das Voice-Mail-System VMS/MSU zurückübermittelt. Im Falle, dass der A-Teilnehmer keine Antwort sendet, also die angebotene Übermittlung seiner Telefonnummer nicht erlaubt, wird der Anruf abgebaut nach einer voreingestellten Zeit T1. Es wird hier mit Schritt 9) weiterverfahren und eine Auslösenachricht (Release Message) zum Abbau der Verbindung vom teilnehmereigenen Voice-Mail-System VMS/CCS an die Vermittlungsstelle GMSC gesendet. In diesem Fall antwortet die GMSC gemäß Schritt 10) mit einer RLC-Nachricht und bestätigt den Anrufabbau.

Stimmt der anrufende Teilnehmer jedoch einer Übermittlung seiner Rufnummer temporär für diesen einen Anruf zu, so kann er gemäß Schritt 7) eine Bestätigung der Rufnummernübermittlung durch Betätigen einer DTMF-Tastenfolge innerhalb des Zeitraumes T1 durchführen. Die DTMF-Nachricht wird zum speziellen Voice-Mail-System VMS/MSU übermittelt.

In Schritt 8) wird in einer optionalen zweiten Nachricht, die vom speziellen Voice-Mail-System VMS/MSU an den Teilnehmer übermittelt wird, die erfolgreiche Übertragung seiner Rufnummer bestätigt. Das Voice-Mail-System VMS/CCS des Teilnehmers ist nun in der Lage, den Anrufer anhand der übermittelten Rufnummer zu identifizieren und den Angerufenen durch Anzeige der Rufnummer des Anrufers über den versäumten Anruf zu benachrichtigen. Es wird nun der Anruf abgebaut gemäß den bereits oben beschriebenen Schritten 9) und 10).

## Patentansprüche

1. Verfahren zur Benachrichtigung eines Teilnehmers eines Mobilfunknetzes über einen eingegangenen Anruf eines Anrufers während das Mobiltelefon des Teilnehmers ausgeschaltet war oder keine Verbindung mit dem Mobilfunknetz bestand, wobei die Benachrichtigung über das Mobiltelefon des Teilnehmers erfolgt, sobald das Mobiltelefon sich wieder im Mobilfunknetz registriert hat, und die Nachricht zumindest die Rufnummer des verpassten Anrufers umfasst,
**dadurch gekennzeichnet,**
**dass** im Falle einer unterdrückten Rufnummernanzeige (CLIR) seitens des Anrufers vom Mobilfunknetz automatisch eine Nachricht an den Anrufer übermittelt wird, anhand welcher der Anrufer per Dialog aufgefordert wird, seine Rufnummernübermittlung temporär für diesen Anruf freizuschalten, so dass die Rufnummer des Anrufers dem Teilnehmer mitgeteilt werden kann, wobei die Nachricht an den Anrufer nur übermittelt wird, wenn der Angerufene nicht erreichbar ist und keine Rufumleitung aktiviert hat, wobei das Verfahren sowohl unter einer Rufweiterleitungs-Bedingung call forwarding not reachable, CFNREACH, als auch bei allen anderen unbedingten Rufweiterleitungen, unconditional call forwardings, wie call forwarding busy, CFBUSY, und call forwarding no reply, CFNREPLY, durchführbar ist.

2. Verfahren nach Anspruch 1, **dadurch gekennzeichnet, dass** die Nachricht per Sprachansage an den Anrufer übermittelt wird.

3. Verfahren nach Anspruch 1, **dadurch gekennzeichnet, dass** die Nachricht per Kurznachricht, SMS, an den Anrufer übermittelt wird

4. Verfahren nach einem der Ansprüche 1 bis 3, **dadurch gekennzeichnet, dass** die Übermittlung der Nachricht und die Steuerung des Dialoges mit dem Anrufer durch ein Voice Mail System oder anderen Server erfolgt.

5. Verfahren nach einem der Ansprüche 1 bis 4, **dadurch gekennzeichnet, dass** der Anrufer per DTMF-Signalisierung über sein Mobiltelefon mit dem Voice Mail System kommuniziert und **dadurch** die Rufnummernübermittlung temporär freischaltet.

6. Computerprogramm mit einem Programmcode, der auf einem Computer ausgeführt ein Verfahren nach einem der Ansprüche 1 bis 5 durchführt.

7. Produkt mit einem Computerprogramm, das einen auf einem Computer ausführbaren Programmcode zur Durchführung des Verfahrens nach einem der Ansprüche 1 bis 5 umfasst.

## Claims

1. Method for notifying a subscriber to a mobile communications network about a received call from a caller while the mobile telephone of the subscriber was switched off or there was no connection to the mobile communications network, wherein the notification ensues via the mobile telephone of the subscriber as soon as the mobile telephone has registered again in the mobile communications network and the message comprises at least the call number of the missed caller, **characterised in that** in the event of a suppressed call number display (CLIR) on the part of the caller a message to the caller is automatically transmitted by the mobile communications network on the basis of which the caller is requested by dialogue to release his call number transmission temporarily for this call so that the call number of the caller can be communicated to the subscriber, wherein the message to the caller is only transmitted when the person called cannot be reached and has not activated any call diversion, wherein the method can be carried out both under a call forwarding condition: call forwarding not reachable, CFNREACH, and in all other unconditional call forwarding states such as call forwarding busy, CFBUSY, and call forwarding no reply, CFNREPLY.

2. Method according to claim 1, **characterised in that** the message is transmitted to the caller by speech announcement.

3. Method according to claim 1, **characterised in that** the message is transmitted to the caller by short message, SMS.

4. Method according to any of claims 1 to 3, **characterised in that** the transmission of the message and the control of the dialogue with the caller ensues by a voice mail system or other server.

5. Method according to any of claims 1 to 4, **characterised in that** the caller communicates by DTMF signalling via his mobile telephone with the voice mail system and as a result temporarily releases the call number transmission.

6. Computer program having a program code which executed on a computer carries out a method according to any of claims 1 to 5.

7. Product having a computer program comprising a program code executable on a computer for carrying out the method according to any of claims 1 to 5.

## Revendications

1. Procédé pour notifier à un abonné d'un réseau de téléphonie mobile l'arrivée d'un appel d'un appelant pendant que le téléphone mobile dudit abonné était éteint ou alors qu'il n'y avait pas de connexion avec le réseau mobile, la notification se faisant par l'intermédiaire du téléphone mobile de l'abonné dès que le téléphone mobile s'est à nouveau identifié dans le réseau mobile, et le message contenant au moins le numéro d'appel du correspondant manqué,
**caractérisé en ce** dans le cas d'une restriction de présentation du numéro d'appel (CLIR) de la part de l'appelant, le réseau mobile envoie automatiquement à celui-ci un message l'invitant en mode dialogué à autoriser temporairement la transmission de son numéro d'appel pour cet appel, pour que ce numéro d'appel puisse être communiqué à l'abonné, le message n'étant envoyé à l'appelant que si l'appelé ne peut pas être joint et s'il n'a pas activé le renvoi automatique d'appel, le procédé pouvant être mis en oeuvre aussi bien dans des conditions de transfert d'appel pour non accessibilité CFNREACH que dans tous les autres cas de transfert d'appel sans conditions tels que le transfert d'appel pour occupation, CFBUSY, et le transfert d'appel pour non réponse, CFNREPLY.

2. Procédé selon la revendication 1, **caractérisé en ce que** le message est transmis à l'appelant de manière vocale.

3. Procédé selon la revendication 1, **caractérisé en ce que** le message est transmis à l'appelant par message court, SMS.

4. Procédé selon l'une des revendications 1 à 3, **caractérisé en ce que** la transmission du message et la commande du dialogue avec l'appelant se font à l'aide d'un système de boîte vocale ou d'un autre serveur.

5. Procédé selon l'une des revendications 1 à 4, **caractérisé en ce que** l'appelant communique avec le système de boîte vocale par signalisation multifréquence, à l'aide de son téléphone mobile, et autorise ainsi temporairement la transmission de son numéro d'appel.

6. Programme informatique avec un code de programme qui, exécuté sur un ordinateur, met en oeuvre un procédé selon l'une des revendications 1 à 5.

7. Produit avec un programme informatique, qui comprend un code de programme exécutable sur un ordinateur pour la mise en oeuvre du procédé selon l'une des revendications 1 à 5.
